# EUROPEAN PATENT APPLICATION

(11) **EP 4 390 672 A1**
(43) Date of publication of application: **26.06.2024**
(21) Application number: 23218961.3
(22) Date of filing: 21.12.2023
(51) Int. Cl.: G06F 8/65, G06F 21/57

(54) **SYSTEMS AND METHODS FOR USING SOFTWARE SUPPLY CHAIN TO CONTROL SOFTWARE OPERATIONS**

(30) Priority: 23.12.2022 US 202263435140 P
(71) Applicant: Palantir Technologies Inc., Denver, CO 80202 (US)
(72) Inventor: HACKER, Sean, Denver, 80202 (US); MADGE, Saahil, Denver, 80202 (US); STEARNS, Taylor, Denver, 80202 (US)
(74) Representative: Sayer, Robert David

(57) **Abstract**

Systems and methods for using software supply chain information. In some embodiments, a method for using software supply chain to control software operations includes obtaining software supply chain metadata of a software product release before the software product release is deployed. In certain embodiments, the software supply chain metadata includes a collection of software materials. In some embodiments, the method further includes receiving one or more action rules associated with incompliant software materials, searching the software supply chain metadata to identify whether the collection of software materials include any incompliant software material, and deploying the software product release if the collection of software materials does not include any incompliant software material.

## Description

### 1. CROSS REFERENCE TO RELATED APPLICATIONS

This application claims priority to U.S. Provisional Application No. 63/435,140, filed December 23, 2022, incorporated by reference herein for all purposes.

### TECHNICAL FIELD

Certain embodiments of the present disclosure are directed to software supply chain management systems for meeting, among other requirements, legal compliance and mitigating data security risks. More particularly, some embodiments of the present disclosure provide systems and methods for controlling software operations using software supply chain metadata.

### 2. BACKGROUND

Within highly regulated environments, it is becoming increasingly critical to maintain continuous visibility into all layers of the software supply chain. For example, the visibility may take many forms, ranging from cryptographically signed attestations from third party vendors or open source projects, to self-generated scan information, all of which contributes to a deeper understanding of a software supply chain.

Hence it is highly desirable to improve the techniques for providing a software supply chain.

### 3. SUMMARY

The scope of protection sought for various embodiments of the invention is set out by the independent claims. Certain embodiments of the present disclosure are directed to software supply chain management systems. More particularly, some embodiments of the present disclosure provide systems and methods for controlling software operations using software supply chain metadata.

According to some embodiments, a method for using software supply chain to control software operations includes obtaining software supply chain metadata of a software product release before the software product release is deployed. The software supply chain metadata includes a collection of software materials. The method further includes receiving one or more action rules associated with incompliant software materials, searching the software supply chain metadata to identify whether the collection of software materials include any incompliant software material, and deploying the software product release if the collection of software materials does not include any incompliant software material. The method is performed using one or more processors.

According to some embodiments, a system for using software supply chain to control software operations includes one or more processors and one or more having a plurality of instructions stored thereon that, when executed by the processor, causes the one or more processors to: obtain software supply chain metadata of a software product release before the software product release is deployed, the software supply chain metadata including a collection of software materials, receive one or more action rules associated with incompliant software materials, search the software supply chain metadata to identify whether the collection of software materials includes any incompliant software material, and deploy the software product release if the collection of software materials does not include any incompliant software material.

According to certain embodiments, a method for using software supply chain to control software operations, the method includes obtaining software supply chain metadata of a software product release after the software product release is deployed. The software supply chain metadata includes a collection of software materials. The method further includes receiving one or more action rules associated with incompliant software materials; searching the software supply chain metadata to identify whether the collection of software materials include any incompliant software material; and allowing continued operation of the software product release if the collection of software materials does not include any incompliant software material. The method is performed using one or more processors.

Depending upon embodiment, one or more benefits may be achieved. These benefits and various additional objects, features and advantages of the present disclosure can be fully appreciated with reference to the detailed description and accompanying drawings that follow.

### 4. BRIEF DESCRIPTION OF THE DRAWINGS

FIG. 1 is a simplified diagram showing a method for using software supply chain to control software operation according to one embodiment of the present disclosure.
FIG. 2 is a simplified diagram showing a method for using software supply chain to control software operation according to one embodiment of the present disclosure.
FIG. 3 is a simplified diagram showing a method for using software supply chain to control software operation according to one embodiment of the present disclosure.
FIG. 4 is a simplified diagram showing an example of an operating environment in which a software supply chain manager may be implemented according to one embodiment of the present disclosure.
FIG. 5 is a simplified diagram showing a computing system for implementing a system for isolating network traffic of multiple users across a network of a computing platform according to one embodiment of the present disclosure.

### 5. DETAILED DESCRIPTION

Conventional systems and methods are often not capable of efficiently automating decision-making processes in a software supply chain (e.g., about health, pedigree, and deployability of various software components) to control software operations.

Various embodiments of the present disclosure can achieve benefits and/or improvements by a computing system for using software supply chain information to control software operations. In some embodiments, benefits include significant improvements, including, for example, increased efficiency, increased data security, reduced complexity, and improved scalability, in controlling software operations by automating decision-making processes in a software supply chain (e.g., about health, pedigree, and deployability of various software components).

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

In certain embodiments, one or more solutions rooted in computer technology overcome one or more problems specifically arising in the realm of computer technology. According to some embodiments, systems and methods for the present disclosure are directed to using software supply chain, for example, using software supply chain metadata as a means of controlling software operations. In certain embodiments, the software supply chain management system uses software supply chain metadata such as software bill of material information (SBOM) to control software deployment at scale. A SBOM may comprise a detailed record or inventory of materials or components within software, for example within one or more software applications, including (by way of non-limiting example) records of open-source and commercial libraries, dependencies, licenses, known vulnerabilities and metadata associated with the software. It may, in this sense, be considered an inventory of all components used to build software, e.g., a software artefact, such as an application. Through analysis of metadata, such as that comprising or comprised in a SBOM, defects and/or vulnerabilities can be tracked to a specific component or components. In some embodiments, it is becoming increasingly important to maintain continuous visibility into all layers of the software supply chain (e.g., two or more layers of software dependencies). In certain embodiments, the visibility could include various information including, for example, cryptographically signed attestations from third party vendors, open source projects, self-generated scan information, and/or the like, all of which contributes to a deeper understanding of software supply chain. In some embodiments, the visibility of software supply chain is operationally leveraged for operation strategy.

According to certain embodiments, the software supply chain metadata can be used to define constraints from which the software supply chain management systems can automatically make decisions about the health, pedigree, and deployability of various software components. In some embodiments, decisions made by such a system can include automated recall of software to ensure it is unable to be deployed, notification to operators when a system is running a piece of software with a recently discovered supply chain vulnerability, and/or autonomous upgrades or downgrades of software without operator intervention to ensure that systems remain compliant and protected from threats to the supply chain.

According to some embodiments, systems and methods for managing software supply chain ties the software supply chain metadata with operational systems in order to automate the decision-making process. In certain embodiments, the system can close the loop on security vulnerabilities within the supply chain to provide developers, operators, and security professionals with a single source of information regarding what risk in the deployed software systems. In some embodiments, SBOMs are only one form of software supply chain metadata and additional formats and data types can be leveraged in similar manners.

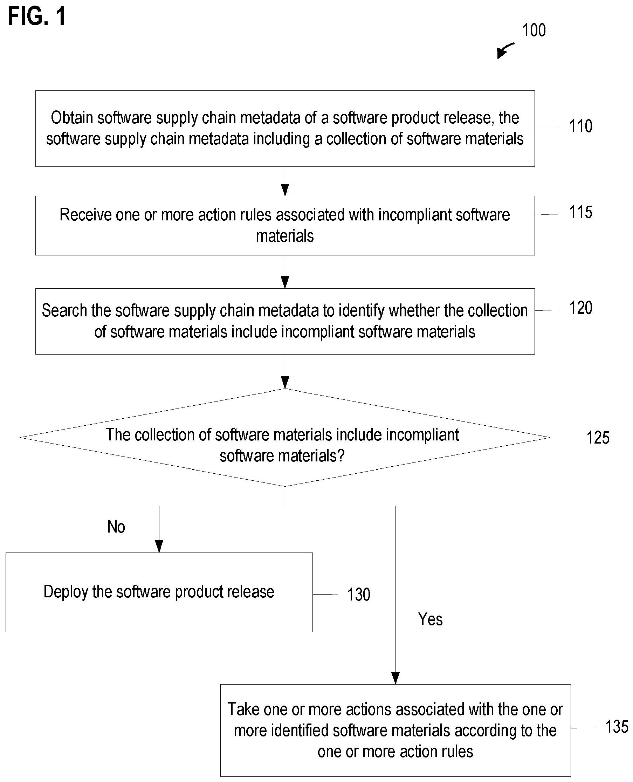

FIG. 1 is a simplified diagram showing a method 100 for using software supply chain to control software operation according to certain embodiments of the present disclosure. FIG. 1 is merely an example, which should not unduly limit the scope of the claims. One of ordinary skill in the art would recognize many variations, alternatives, and modifications. The method 100 for using software supply chain to control software operation includes processes 110, 115, 120, 125, 130, and 135. Although the above has been shown using a selected group of processes for the method 100 for using software supply chain to control software operation, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 100 are performed by a system (e.g., the computing system 500). In certain examples, some or all processes (e.g., steps) of the method 100 are performed by a computer and/or a processor directed by a code. For example, a computer includes a server computer and/or a client computer (e.g., a personal computer). In some examples, some or all processes (e.g., steps) of the method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 110, the system obtains software supply chain metadata of a software product release (e.g., a version of a software product), the software supply chain metadata including a collection of software materials. In certain embodiments, the system receives the software supply chain metadata before the software product release is deployed. In some embodiments, the system receives software supply chain metadata and/or an indication (e.g., a software product release identifier) associated with the software supply chain metadata via a software interface. In certain embodiments, a software interface includes an application programming interface (API), a web service interface, retrieving information from a file, retrieving information from a data repository, and/or the like. In some embodiments, the system receives the software supply chain metadata by retrieving the metadata from a data repository. In certain embodiments, the system receives the software supply chain metadata by retrieving the metadata from a data repository based on a release identifier (e.g., version number, patch number, etc.). In some embodiments, the software supply chain metadata includes a software bill of materials.

According to certain embodiments, at process 115, the system receives one or more action rules associated with incompliant software materials. In some embodiments, the action rules are a part of a software operation policy. In certain embodiments, the actions include one or more of: a recall action to prevent deployment of the software product release; a notification action to provide a notification to a user or a software system, a marking action to mark the software product release as invalid; an upgrade action to upgrade the software product release to a new release; and a rollback action to rollback the software product release to a previous release. In some embodiments, the action rules include rules on when to take those actions. For example, the action rules and/or the software operation policy may include a rule to take a rollback action if the collection of software materials include an incompliant software material.

According to some embodiments, at process 120, the system searches the software supply chain metadata to identify whether the collection of software materials include any incompliant software materials. In certain embodiments, the system searches the software supply chain metadata to identify one or more incompliant software materials in the collection of software materials based at least in part on one or more compliance rules. In some embodiments, the one or more compliance rules are a part of the software operation policy. In certain embodiments, the system retrieves the action rules, the compliance rules, and/or the software operation policy from a data repository.

In some embodiments, the system retrieves the action rules, the compliance rules, and/or the software operation policy from a data repository based at least in part on an operation identifier. In certain embodiments, the operation identifier is associated with a specific entity, a specific runtime environment type (e.g., testing environment, beta deployment environment, development environment, product environment, etc.), a specific entity type (e.g., retail entities, government entities, education institutions, etc.), and/or the like. In some embodiments, the system receives the action rules, the compliance rules, and/or the software operation policy via a software interface. In certain embodiments, the system receives the action rules, the compliance rules, and/or the software operation policy with the software product release information via the software interface.

In some embodiments, the one or more compliance rules include one or more of: a rule on vulnerability, a rule on license compliance, a rule on policy compliance, and/or the like. In certain embodiments, a rule on vulnerability specifies whether a software material (e.g., a software artifact) is incompliant if a vulnerability is identified to be associated with the software material. In some embodiments, a rule on vulnerability specifies that a software material is incompliant if a vulnerability at or above a severity level is identified to be associated with the software material. In certain embodiments, a rule on vulnerability specifies that a software material is incompliant if a vulnerability at or above a vulnerability severity score is identified to be associated with the software material. In some embodiments, the vulnerability severity score is a Common Vulnerability Exposure (CVE) score.

In certain embodiments, a rule on license compliance specifies software materials are incompliant if under one or more certain software licenses (e.g., an open-source software license, a viral software license, a GNU General public License (GPL), etc.) and/or software license version (e.g., version 2.0, version 1.5, etc.). In some embodiments, a rule on policy compliance specifies a policy (e.g., no open-source software) for an entity (e.g., a department, a group, an organization, an industry, etc.).

According to certain embodiments, at process 125, the system determines whether the collection of software materials include incompliant software materials. In some embodiments, if no incompliant software materials are identified, the system goes to process 130, deploys the software product release. In certain embodiments, the system deploys the software product release to certain runtime environments. In some embodiments, if one or more incompliant software materials are identified, the system goes to process 135, takes one or more actions associated with the one or more identified software materials according to the one or more action rules. In some examples, the system takes a recall action if one or more incompliant software materials are identified according to the one or more action rules. In certain examples, the system takes an upgrade action if one or more incompliant software materials are identified according to the one or more action rules.

In some embodiments, the system takes a first action associated with a first incompliant software material (e.g., a software material being license incompliant) and takes a second action associated with a second incompliant software material (e.g., a software material being vulnerability incompliant), where the first action is different from the second action. In certain embodiments, the software operation policy and/or the action rules specify different actions for different runtime environments (e.g., beta v. production environment) for the same incompliance. In some examples, the system takes a first action associated with the one or more identified software materials in a first runtime environment according to the one or more action rules and takes a second action associated with the one or more identified software materials in a second runtime environment different from the first runtime environment according to the one or more action rules, where the second action is different from the first action. For example, when an incompliant software material is identified, the system takes a notification action in a development environment and a recall action in a production environment. In certain embodiments, the system two or more actions associated with the one or more incompliant software materials. For example, the system takes both a notification action and a recall action.

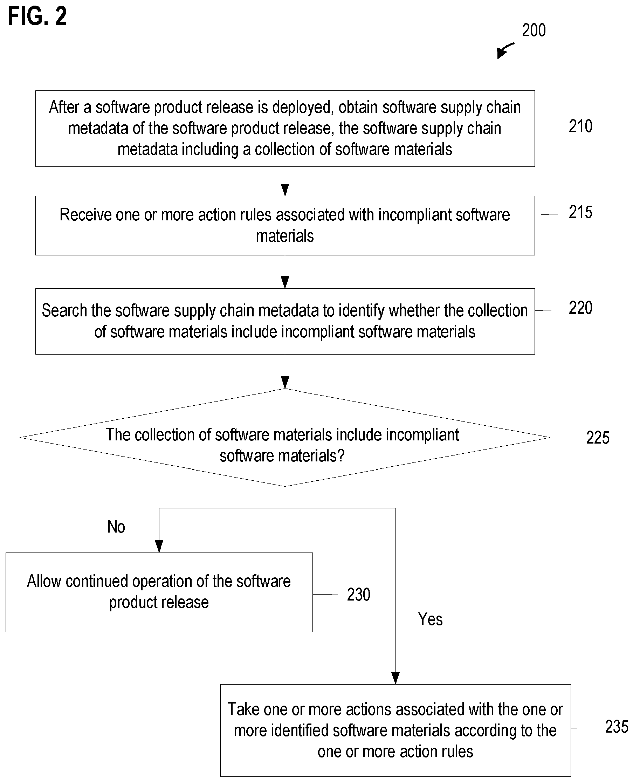

FIG. 2 is a simplified diagram showing a method 200 for using software supply chain to control software operation according to certain embodiments of the present disclosure. FIG. 2 is merely an example, which should not unduly limit the scope of the claims. One of ordinary skill in the art would recognize many variations, alternatives, and modifications. The method 200 for using software supply chain to control software operation includes processes 210, 215, 220, 225, 230, and 235. Although the above has been shown using a selected group of processes for the method 200 for using software supply chain to control software operation, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 200 are performed by a system (e.g., the computing system 500). In certain examples, some or all processes (e.g., steps) of the method 200 are performed by a computer and/or a processor directed by a code. For example, a computer includes a server computer and/or a client computer (e.g., a personal computer). In some examples, some or all processes (e.g., steps) of the method 200 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 210, after a software product release (e.g., a version of a software product) is deployed, the system obtains software supply chain metadata of the software product release, the software supply chain metadata including a collection of software materials. In some embodiments, the system checks for incompliance periodically. In certain embodiments, the system checks for incompliance at a trigger, for example, a trigger of a notification of a critical vulnerability. In some embodiments, the system checks whether the critical vulnerability affects the software product release. In certain embodiments, the system checks for incompliance if a compliance rule has been updated (e.g., updated policy, modified license, etc.).

In certain embodiments, the system receives the software supply chain metadata before the software product release is deployed. In some embodiments, the system receives software supply chain metadata and/or an indication (e.g., a software product release identifier) associated with the software supply chain metadata via a software interface. In some embodiments, the system receives the software supply chain metadata by retrieving the metadata from a data repository. In certain embodiments, the system receives the software supply chain metadata by retrieving the metadata from a data repository based on a release identifier (e.g., version number, patch number, etc.). In some embodiments, the software supply chain metadata includes a software bill of materials.

According to certain embodiments, at process 215, the system receives one or more action rules associated with incompliant software materials. In some embodiments, the action rules are a part of a software operation policy. In certain embodiments, the actions include one or more of: a recall action to prevent deployment of the software product release; a notification action to provide a notification to a user or a software system, a marking action to mark the software product release as invalid; an upgrade action to upgrade the software product release to a new release; and a rollback action to rollback the software product release to a previous release. In some embodiments, the action rules include rules on when to take those actions. For example, the action rules and/or the software operation policy may include a rule to take a rollback action if the collection of software materials include an incompliant software material.

According to some embodiments, at process 220, the system searches the software supply chain metadata to identify whether the collection of software materials include any incompliant software materials. In certain embodiments, the system searches the software supply chain metadata to identify one or more incompliant software materials in the collection of software materials based at least in part on one or more compliance rules. In some embodiments, the one or more compliance rules are a part of the software operation policy. In certain embodiments, the system retrieves the action rules, the compliance rules, and/or the software operation policy from a data repository.

In some embodiments, the system retrieves the action rules, the compliance rules, and/or the software operation policy from a data repository based at least in part on an operation identifier. In certain embodiments, the operation identifier is associated with a specific entity, a specific runtime environment type (e.g., testing environment, beta deployment environment, development environment, product environment, etc.), a specific entity type (e.g., retail entities, government entities, education institutions, etc.), and/or the like. In some embodiments, the system receives the action rules, the compliance rules, and/or the software operation policy via a software interface. In certain embodiments, the system receives the action rules, the compliance rules, and/or the software operation policy with the software product release information via the software interface.

In some embodiments, the one or more compliance rules include one or more of: a rule on vulnerability, a rule on license compliance, a rule on policy compliance, and/or the like. In certain embodiments, a rule on vulnerability specifies whether a software material (e.g., a software artifact) is incompliant if a vulnerability is identified to be associated with the software material. In some embodiments, a rule on vulnerability specifies that a software material is incompliant if a vulnerability at or above a severity level is identified to be associated with the software material. In certain embodiments, a rule on vulnerability specifies that a software material is incompliant if a vulnerability at or above a vulnerability severity score is identified to be associated with the software material. In some embodiments, the vulnerability severity score is a Common Vulnerability Exposure (CVE) score.

In certain embodiments, a rule on license compliance specifies software materials are incompliant if under one or more certain software licenses (e.g., an open-source software license, a viral software license, a GNU General public License (GPL), etc.) and/or software license version (e.g., version 2.0, version 2.5, etc.). In some embodiments, a rule on policy compliance specifies a policy (e.g., no open-source software) for an entity (e.g., a department, a group, an organization, an industry, etc.).

According to certain embodiments, at process 225, the system determines whether the collection of software materials include incompliant software materials. In some embodiments, if no incompliant software materials are identified, the system takes no action or goes to process 230, allows continued operation of the software product release. In certain embodiments, the system deploys the software product release to certain runtime environments. In some embodiments, if one or more incompliant software materials are identified, the system goes to process 235, takes one or more actions associated with the one or more identified software materials according to the one or more action rules. In some examples, the system takes a recall action if one or more incompliant software materials are identified according to the one or more action rules. In certain examples, the system takes an upgrade action if one or more incompliant software materials are identified according to the one or more action rules.

In some embodiments, the system takes a first action associated with a first incompliant software material (e.g., a software material being license incompliant) and takes a second action associated with a second incompliant software material (e.g., a software material being vulnerability incompliant), where the first action is different from the second action. In certain embodiments, the software operation policy and/or the action rules specify different actions for different runtime environments (e.g., beta v. production environment) for the same incompliance. In some examples, the system takes a first action associated with the one or more identified software materials in a first runtime environment according to the one or more action rules and takes a second action associated with the one or more identified software materials in a second runtime environment different from the first runtime environment according to the one or more action rules, where the second action is different from the first action. For example, when an incompliant software material is identified, the system takes a notification action in a development environment and a recall action in a production environment. In certain embodiments, the system two or more actions associated with the one or more incompliant software materials. For example, the system takes both a notification action and a recall action.

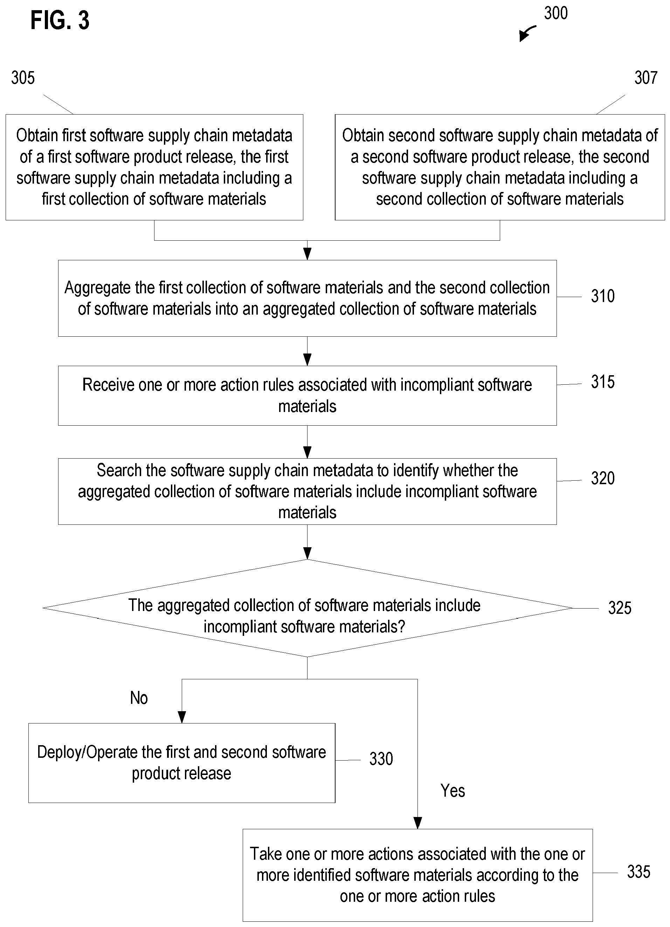

FIG. 3 is a simplified diagram showing a method 300 for using software supply chain to control software operation according to certain embodiments of the present disclosure. FIG. 3 is merely an example, which should not unduly limit the scope of the claims. One of ordinary skill in the art would recognize many variations, alternatives, and modifications. One of ordinary skill in the art would recognize many variations, alternatives, and modifications. The method 300 for using software supply chain to control software operation includes processes 305, 307, 310, 315, 320, 325, 330, and 335. Although the above has been shown using a selected group of processes for the method 300 for using software supply chain to control software operation, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 300 are performed by a system (e.g., the computing system 500). In certain examples, some or all processes (e.g., steps) of the method 300 are performed by a computer and/or a processor directed by a code. For example, a computer includes a server computer and/or a client computer (e.g., a personal computer). In some examples, some or all processes (e.g., steps) of the method 300 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 305, the system obtains first software supply chain metadata of a first software product release, the first software supply chain metadata including a first collection of software materials. In certain embodiments, at process 307, the system obtains second software supply chain metadata of a second software product release, the second software supply chain metadata including a second collection of software materials. In some embodiments, the first software product release is for a first software product and the second software product release is for a second software product. In certain embodiments, the first software product and the second software product include one or more common software components. In some embodiments, at process 310, the system aggregates the first collection of software materials and the second collection of software materials into an aggregated collection of software materials. In certain embodiments, the system is configured to receive three or more software supply chain metadata.

According to certain embodiments, the system checks for incompliance before deployment and/or after deployment. In some embodiments, the system checks for incompliance periodically. In certain embodiments, the system checks for incompliance at a trigger, for example, a trigger of a notification of a critical vulnerability. In some embodiments, the system checks whether the critical vulnerability affects the software product release. In certain embodiments, the system checks for incompliance if a compliance rule has been updated (e.g., updated policy, modified license, etc.).

In certain embodiments, the system receives the software supply chain metadata before the software product release is deployed. In some embodiments, the system receives software supply chain metadata and/or an indication (e.g., a software product release identifier) associated with the software supply chain metadata via a software interface. In some embodiments, the system receives the software supply chain metadata by retrieving the metadata from a data repository. In certain embodiments, the system receives the software supply chain metadata by retrieving the metadata from a data repository based on a release identifier (e.g., version number, patch number, etc.). In some embodiments, the aggregated collection of software materials includes an aggregated software bill of materials.

According to certain embodiments, at process 315, the system receives one or more action rules associated with incompliant software materials. In some embodiments, the action rules are a part of a software operation policy. In certain embodiments, the actions include one or more of: a recall action to prevent deployment of the software product release; a notification action to provide a notification to a user or a software system, a marking action to mark the software product release as invalid; an upgrade action to upgrade the software product release to a new release; and a rollback action to rollback the software product release to a previous release. In some embodiments, the action rules include rules on when to take those actions. For example, the action rules and/or the software operation policy may include a rule to take a rollback action if the aggregated collection of software materials include an incompliant software material.

According to some embodiments, at process 320, the system searches the software supply chain metadata to identify whether the aggregated collection of software materials include any incompliant software materials. In certain embodiments, the system searches the software supply chain metadata to identify one or more incompliant software materials in the aggregated collection of software materials based at least in part on one or more compliance rules. In some embodiments, the one or more compliance rules are a part of the software operation policy. In certain embodiments, the system retrieves the action rules, the compliance rules, and/or the software operation policy from a data repository.

In some embodiments, the system retrieves the action rules, the compliance rules, and/or the software operation policy from a data repository based at least in part on an operation identifier. In certain embodiments, the operation identifier is associated with a specific entity, a specific runtime environment type (e.g., testing environment, beta deployment environment, development environment, product environment, etc.), a specific entity type (e.g., retail entities, government entities, education institutions, etc.), and/or the like. In some embodiments, the system receives the action rules, the compliance rules, and/or the software operation policy via a software interface. In certain embodiments, the system receives the action rules, the compliance rules, and/or the software operation policy with the software product release information via the software interface.

In some embodiments, the one or more compliance rules include one or more of: a rule on vulnerability, a rule on license compliance, a rule on policy compliance, and/or the like. In certain embodiments, a rule on vulnerability specifies whether a software material (e.g., a software artifact) is incompliant if a vulnerability is identified to be associated with the software material. In some embodiments, a rule on vulnerability specifies that a software material is incompliant if a vulnerability at or above a severity level is identified to be associated with the software material. In certain embodiments, a rule on vulnerability specifies that a software material is incompliant if a vulnerability at or above a vulnerability severity score is identified to be associated with the software material. In some embodiments, the vulnerability severity score is a Common Vulnerability Exposure (CVE) score.

In certain embodiments, a rule on license compliance specifies software materials are incompliant if under one or more certain software licenses (e.g., an open-source software license, a viral software license, a GNU General public License (GPL), etc.) and/or software license version (e.g., version 3.0, version 3.5, etc.). In some embodiments, a rule on policy compliance specifies a policy (e.g., no open-source software) for an entity (e.g., a department, a group, an organization, an industry, etc.).

According to certain embodiments, at process 335, the system determines whether the aggregated collection of software materials include incompliant software materials. In some embodiments, if no incompliant software materials are identified, the system goes to process 330, deploys the first and second software product releases or allows continued operation of the first and second software product release. In certain embodiments, the system deploys the software product release to certain runtime environments. In some embodiments, if one or more incompliant software materials are identified, the system goes to process 335, takes one or more actions associated with the one or more identified software materials according to the one or more action rules. In some examples, the system takes a recall action if one or more incompliant software materials are identified according to the one or more action rules. In certain examples, the system takes an upgrade action if one or more incompliant software materials are identified according to the one or more action rules.

In some embodiments, the system takes a first action associated with a first incompliant software material (e.g., a software material being license incompliant) and takes a second action associated with a second incompliant software material (e.g., a software material being vulnerability incompliant), where the first action is different from the second action. In certain embodiments, the software operation policy and/or the action rules specify different actions for different runtime environments (e.g., beta v. production environment) for the same incompliance. In some examples, the system takes a first action associated with the one or more identified software materials in a first runtime environment according to the one or more action rules and takes a second action associated with the one or more identified software materials in a second runtime environment different from the first runtime environment according to the one or more action rules, where the second action is different from the first action. For example, when an incompliant software material is identified, the system takes a notification action in a development environment and a recall action in a production environment. In certain embodiments, the system two or more actions associated with the one or more incompliant software materials. For example, the system takes both a notification action and a recall action.

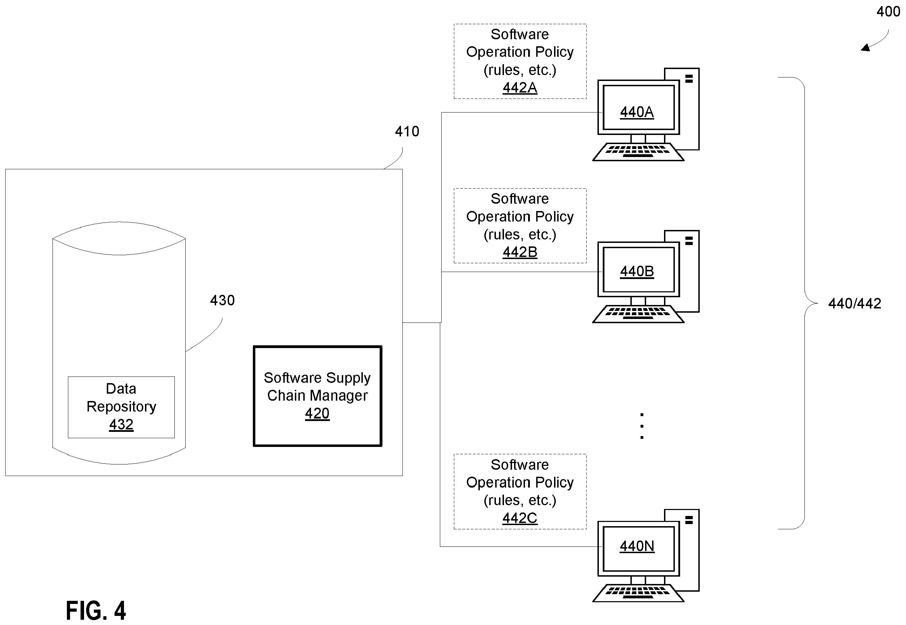

FIG. 4 is an illustrative example of software supply chain management environment 400, according to certain embodiments of the present disclosure. FIG. 4 is merely an example, which should not unduly limit the scope of the claims. One of ordinary skill in the art would recognize many variations, alternatives, and modifications. According to certain embodiments, software supply chain management environment 400 includes a software supply chain management system 410 and deployed systems (e.g., in a runtime environment) 440 (e.g., deployed system 440A, deployed system 440B, ... , deployed systems 440N). In some embodiments, the software supply chain management system 410 includes a software supply chain manager 420 and a repository 430. In certain embodiments, some components of the software supply chain management system 410 are included in one or more deployed systems 440. In some embodiments, the repository 430 includes one or more data repositories 432.

Although the above has been shown using a selected group of components in the software supply chain management environment 400, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to some embodiments, the software supply chain management system 410 and/or the software supply chain manager 420 obtains first software supply chain metadata of a first software product release, the first software supply chain metadata including a first collection of software materials. In certain embodiments, the software supply chain management system 410 and/or the software supply chain manager 420 obtains second software supply chain metadata of a second software product release, the second software supply chain metadata including a second collection of software materials. In some embodiments, the first software product release is for a first software product and the second software product release is for a second software product. In certain embodiments, the first software product and the second software product include one or more common software components. In some embodiments, the software supply chain management system 410 and/or the software supply chain manager 420 aggregates the first collection of software materials and the second collection of software materials into an aggregated collection of software materials. In certain embodiments, the software supply chain management system 410 and/or the software supply chain manager 420 is configured to receive three or more software supply chain metadata.

According to certain embodiments, the software supply chain management system 410 and/or the software supply chain manager 420 checks for incompliance before deployment and/or after deployment. In some embodiments, the software supply chain management system 410 and/or the software supply chain manager 420 checks for incompliance periodically. In certain embodiments, the software supply chain management system 410 and/or the software supply chain manager 420 checks for incompliance at a trigger, for example, a trigger of a notification of a critical vulnerability. In some embodiments, the software supply chain management system 410 and/or the software supply chain manager 420 checks whether the critical vulnerability affects the software product release. In certain embodiments, the software supply chain management system 410 and/or the software supply chain manager 420 checks for incompliance if a compliance rule has been updated (e.g., updated policy, modified license, etc.).

In certain embodiments, the software supply chain management system 410 and/or the software supply chain manager 420 receives the software supply chain metadata before the software product release is deployed. In some embodiments, the software supply chain management system 410 and/or the software supply chain manager 420 receives software supply chain metadata and/or an indication (e.g., a software product release identifier) associated with the software supply chain metadata via a software interface. In some embodiments, the software supply chain management system 410 and/or the software supply chain manager 420 receives the software supply chain metadata by retrieving the metadata from a data repository. In certain embodiments, the software supply chain management system 410 and/or the software supply chain manager 420 receives the software supply chain metadata by retrieving the metadata from a data repository based on a release identifier (e.g., version number, patch number, etc.). In some embodiments, the aggregated collection of software materials includes an aggregated software bill of materials.

According to certain embodiments, the software supply chain management system 410 and/or the software supply chain manager 420 receives one or more action rules associated with incompliant software materials. In some embodiments, the action rules are a part of a software operation policy 442. In certain embodiments, a deploy system 440(e.g., a system, a runtime environment) is associated with a respective software operation policy 442 (e.g., software operation policy 442A, software operation policy 442B, ... , software operation policy 442N). In certain embodiments, the actions include one or more of: a recall action to prevent deployment of the software product release; a notification action to provide a notification to a user or a software system, a marking action to mark the software product release as invalid; an upgrade action to upgrade the software product release to a new release; and a rollback action to rollback the software product release to a previous release. In some embodiments, the action rules include rules on when to take those actions. For example, the action rules and/or the software operation policy may include a rule to take a rollback action if the aggregated collection of software materials include an incompliant software material.

According to some embodiments, the software supply chain management system 410 and/or the software supply chain manager 420 searches the software supply chain metadata to identify whether the aggregated collection of software materials include any incompliant software materials. In certain embodiments, the software supply chain management system 410 and/or the software supply chain manager 420 searches the software supply chain metadata to identify one or more incompliant software materials in the aggregated collection of software materials based at least in part on one or more compliance rules. In some embodiments, the one or more compliance rules are a part of the software operation policy. In certain embodiments, the software supply chain management system 410 and/or the software supply chain manager 420 retrieves the action rules, the compliance rules, and/or the software operation policy from a data repository (e.g., the data repository 432).

In some embodiments, the software supply chain management system 410 and/or the software supply chain manager 420 retrieves the action rules, the compliance rules, and/or the software operation policy from a data repository based at least in part on an operation identifier. In certain embodiments, the operation identifier is associated with a specific entity, a specific runtime environment type (e.g., testing environment, beta deployment environment, development environment, product environment, etc.), a specific entity type (e.g., retail entities, government entities, education institutions, etc.), and/or the like. In some embodiments, the software supply chain management system 410 and/or the software supply chain manager 420 receives the action rules, the compliance rules, and/or the software operation policy 442 via a software interface. In certain embodiments, the software supply chain management system 410 and/or the software supply chain manager 420 receives the action rules, the compliance rules, and/or the software operation policy 442 with the software product release information via the software interface.

In some embodiments, the one or more compliance rules include one or more of: a rule on vulnerability, a rule on license compliance, a rule on policy compliance, and/or the like. In certain embodiments, a rule on vulnerability specifies whether a software material (e.g., a software artifact) is incompliant if a vulnerability is identified to be associated with the software material. In some embodiments, a rule on vulnerability specifies that a software material is incompliant if a vulnerability at or above a severity level is identified to be associated with the software material. In certain embodiments, a rule on vulnerability specifies that a software material is incompliant if a vulnerability at or above a vulnerability severity score is identified to be associated with the software material. In some embodiments, the vulnerability severity score is a Common Vulnerability Exposure (CVE) score.

In certain embodiments, a rule on license compliance specifies software materials are incompliant if under one or more certain software licenses (e.g., an open-source software license, a viral software license, a GNU General public License (GPL), etc.) and/or software license version (e.g., version 3.0, version 3.5, etc.). In some embodiments, a rule on policy compliance specifies a policy (e.g., no open-source software) for an entity (e.g., a department, a group, an organization, an industry, etc.).

According to certain embodiments, the software supply chain management system 410 and/or the software supply chain manager 420 determines whether the aggregated collection of software materials include incompliant software materials. In some embodiments, if no incompliant software materials are identified, the software supply chain management system 410 and/or the software supply chain manager 420 deploys the first and second software product releases or allows continued operation of the first and second software product releases. In certain embodiments, the software supply chain management system 410 and/or the software supply chain manager 420 deploys the software product release to certain runtime environments. In some embodiments, if one or more incompliant software materials are identified, the software supply chain management system 410 and/or the software supply chain manager 420 takes one or more actions associated with the one or more identified software materials according to the one or more action rules. In some examples, the software supply chain management system 410 and/or the software supply chain manager 420 takes a recall action if one or more incompliant software materials are identified according to the one or more action rules. In certain examples, the software supply chain management system 410 and/or the software supply chain manager 420 takes an upgrade action if one or more incompliant software materials are identified according to the one or more action rules.

In some embodiments, the software supply chain management system 410 and/or the software supply chain manager 420 takes a first action associated with a first incompliant software material (e.g., a software material being license incompliant) and takes a second action associated with a second incompliant software material (e.g., a software material being vulnerability incompliant), where the first action is different from the second action. In certain embodiments, the software operation policy and/or the action rules specify different actions for different runtime environments (e.g., beta v. production environment) for the same incompliance. In some examples, the software supply chain management system 410 and/or the software supply chain manager 420 takes a first action associated with the one or more identified software materials in a first runtime environment according to the one or more action rules and takes a second action associated with the one or more identified software materials in a second runtime environment different from the first runtime environment according to the one or more action rules, where the second action is different from the first action. For example, when an incompliant software material is identified, the software supply chain management system 410 and/or the software supply chain manager 420 takes a notification action in a development environment and a recall action in a production environment. In certain embodiments, the software supply chain management system 410 and/or the software supply chain manager 420 two or more actions associated with the one or more incompliant software materials. For example, the software supply chain management system 410 and/or the software supply chain manager 420 takes both a notification action and a recall action.

In some embodiments, the repository 430 can include SBOMs, one or more software product releases, one or more identified incompliance, one or more action rules, one or more compliance rules, one or more software operation policies, and/or the like. The repository 430 may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the software supply chain management environment 400 can execute software or firmware stored in non-transitory computer-readable medium to implement various processing steps. Various components and processors of the software supply chain management environment 400 can be implemented by one or more computing devices including, but not limited to, circuits, a computer, a cloud-based processing unit, a processor, a processing unit, a microprocessor, a mobile computing device, and/or a tablet computer. In some cases, various components of the software supply chain management environment 400 (e.g., the software supply chain management system 410, deployed systems 440, the software supply chain manager 420, etc.) can be implemented on a shared computing device. Alternatively, a component of the software supply chain management environment 400 can be implemented on multiple computing devices. In some implementations, various modules and components of the software supply chain management environment 400 can be implemented as software, hardware, firmware, or a combination thereof. In some cases, various components of the software supply chain management environment 400 can be implemented in software or firmware executed by a computing device.

Various components of software supply chain management environment 400 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

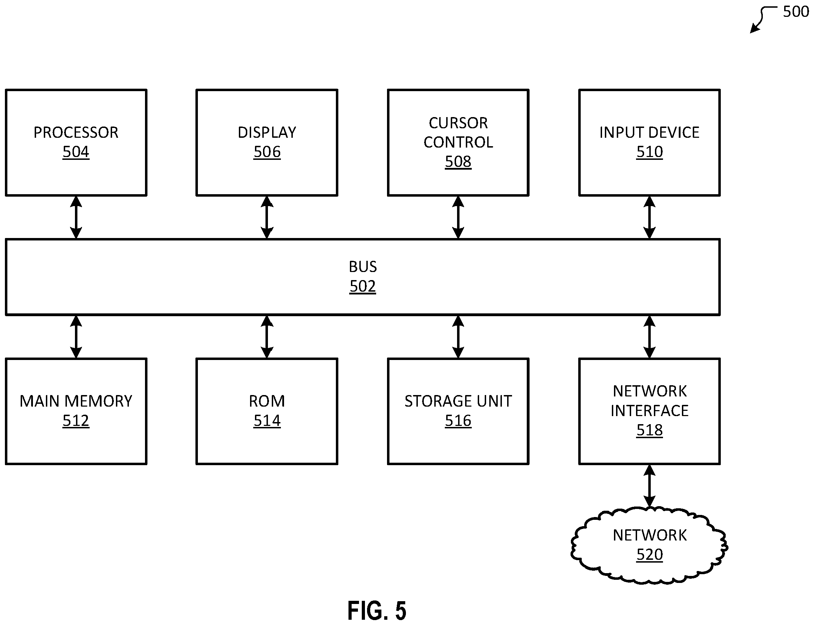

FIG. 5 is a simplified diagram showing a computing system for implementing a system 500 for using software supply chain to control software operations in accordance with at least one example set forth in the disclosure. This diagram is merely an example, which should not unduly limit the scope of the claims. One of ordinary skill in the art would recognize many variations, alternatives, and modifications.

The computing system 500 includes a bus 502 or other communication mechanism for communicating information, a processor 504, a display 506, a cursor control component 508, an input device 510, a main memory 512, a read only memory (ROM) 514, a storage unit 516, and a network interface 518. In some embodiments, some or all processes (e.g., steps) of the method 100, the method 200 and/or the method 300 are performed by the computing system 500. In some examples, the bus 502 is coupled to the processor 504, the display 506, the cursor control component 508, the input device 510, the main memory 512, the read only memory (ROM) 514, the storage unit 516, and/or the network interface 518. In certain examples, the network interface is coupled to a network 520. For example, the processor 504 includes one or more general purpose microprocessors. In some examples, the main memory 512 (e.g., random access memory (RAM), cache and/or other dynamic storage devices) is configured to store information and instructions to be executed by the processor 504. In certain examples, the main memory 512 is configured to store temporary variables or other intermediate information during execution of instructions to be executed by processor 504. For examples, the instructions, when stored in the storage unit 516 accessible to processor 504, render the computing system 500 into a special-purpose machine that is customized to perform the operations specified in the instructions. In some examples, the ROM 514 is configured to store static information and instructions for the processor 504. In certain examples, the storage unit 516 (e.g., a magnetic disk, optical disk, or flash drive) is configured to store information and instructions.

In some embodiments, the display 506 (e.g., a cathode ray tube (CRT), an LCD display, or a touch screen) is configured to display information to a user of the computing system 500. In some examples, the input device 510 (e.g., alphanumeric and other keys) is configured to communicate information and commands to the processor 504. For example, the cursor control component 508 (e.g., a mouse, a trackball, or cursor direction keys) is configured to communicate additional information and commands (e.g., to control cursor movements on the display 506) to the processor 504.

According to certain embodiments, a method for using software supply chain to control software operations, the method comprising: obtaining software supply chain metadata of a software product release before the software product release is deployed, the software supply chain metadata including a collection of software materials; receiving one or more action rules associated with incompliant software materials; searching the software supply chain metadata to identify whether the collection of software materials include any incompliant software material; and deploying the software product release if the collection of software materials does not include any incompliant software material; wherein the method is performed using one or more processors. For example, the method is implemented according to at least FIG. 1, FIG. 2, FIG. 3, and/or FIG. 4.

In some embodiments, the software supply chain metadata includes a software bill of materials. In certain embodiments, the method further comprises: if the collection of software materials includes one or more identified incompliant software material: taking one or more actions associated with the one or more identified software materials according to the one or more action rules. In some embodiments, the searching the software supply chain metadata comprises searching the software supply chain metadata based at least in part on a software operation policy, wherein the software operation policy includes one or more compliance rules and the one or more action rules. In certain embodiments, the one or more compliance rules include at least one selected from a group consisting of a rule on vulnerability, a rule on license compliance, and a rule on policy compliance.

In some embodiments, the taking one or more actions associated with the one or more identified software materials comprises: taking a first action associated with the one or more identified software materials in a first runtime environment according to the one or more action rules; and taking a second action associated with the one or more identified software materials in a second runtime environment different from the first runtime environment according to the one or more action rules, the second action being different from the first action. In certain embodiments, the one or more actions include at least one selected from a group consisting of: a recall action to prevent deployment of the software product release; a marking action to mark the software product release as invalid; a notification action to notify a user or a software system; an upgrade action to upgrade the software product release to a new release; and a rollback action to rollback the software product release to a previous release. In some embodiments, the software product release comprises a plurality of software product releases, wherein the metadata includes an aggregate software bill of materials that aggregates software bill of materials for the plurality of software product releases.

According to some embodiments, a system for using software supply chain to control software operations includes one or more processors and one or more having a plurality of instructions stored thereon that, when executed by the processor, causes the one or more processors to: obtain software supply chain metadata of a software product release before the software product release is deployed, the software supply chain metadata including a collection of software materials, receive one or more action rules associated with incompliant software materials, search the software supply chain metadata to identify whether the collection of software materials includes any incompliant software material, and deploy the software product release if the collection of software materials does not include any incompliant software material. For example, the method is implemented according to at least FIG. 1, FIG. 2, FIG. 3, and/or FIG. 4.

In certain embodiments, the software supply chain metadata includes a software bill of materials. In some embodiments, the system further includes instructions stored thereon that, when executed by the processor, causes the system to, if the collection of software materials includes one or more identified incompliant software material, take one or more actions associated with the one or more identified software materials according to the one or more action rules. In certain embodiments, to search the software supply chain metadata comprises to search the software supply chain metadata based at least in part on a software operation policy, wherein the software operation policy includes one or more compliance rules and the one or more action rules. In some embodiments, the one or more compliance rules include at least one selected from a group consisting of a rule on vulnerability, a rule on license compliance, and a rule on policy compliance.

In certain embodiments, to take one or more actions associated with the one or more identified software materials comprises to: take a first action associated with the one or more identified software materials in a first runtime environment according to the one or more action rules, and take a second action associated with the one or more identified software materials in a second runtime environment different from the first runtime environment according to the one or more action rules, the second action being different from the first action. In some embodiments, the software product release comprises a plurality of software product releases, wherein the metadata includes an aggregate software bill of materials that aggregates software bill of materials for the plurality of software product releases.

According to certain embodiments, a method for using software supply chain to control software operations, the method comprising: obtaining software supply chain metadata of a software product release after the software product release is deployed, the software supply chain metadata including a collection of software materials; receiving one or more action rules associated with incompliant software materials; searching the software supply chain metadata to identify whether the collection of software materials include any incompliant software material; and allowing continued operation of the software product release if the collection of software materials does not include any incompliant software material; wherein the method is performed using one or more processors. For example, the method is implemented according to at least FIG. 1, FIG. 2, FIG. 3, and/or FIG. 4.

In some embodiments, the software supply chain metadata includes a software bill of materials. In certain embodiments, the method further comprises: if the collection of software materials includes one or more identified incompliant software material: taking one or more actions associated with the one or more identified software materials according to the one or more action rules. In some embodiments, the searching the software supply chain metadata comprises searching the software supply chain metadata based at least in part on a software operation policy, wherein the software operation policy includes one or more compliance rules and the one or more action rules. In certain embodiments, the one or more compliance rules include at least one selected from a group consisting of a rule on vulnerability, a rule on license compliance, and a rule on policy compliance. In some embodiments, the software product release comprises a plurality of software product releases. In certain embodiments, the metadata includes an aggregate software bill of materials that aggregates software bill of materials for the plurality of software product releases.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the disclosure is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method (100) for using software supply chain to control software operations, the method comprising:
obtaining (110) software supply chain metadata of a software product release before the software product release is deployed, the software supply chain metadata including a collection of software materials;
receiving (115) one or more action rules associated with incompliant software materials;
searching (120) the software supply chain metadata to identify whether the collection of software materials include any incompliant software material; and
deploying (130) the software product release if the collection of software materials does not include any incompliant software material;
wherein the method is performed using one or more processors.

2. The method of claim 1, wherein the software supply chain metadata includes a software bill of materials.

3. The method of claim 1 or claim 2, further comprising:
if the collection of software materials includes one or more identified incompliant software material:
taking one or more actions (135) associated with the one or more identified software materials according to the one or more action rules.

4. The method of claim 3, wherein the searching the software supply chain metadata comprises searching the software supply chain metadata based at least in part on a software operation policy, wherein the software operation policy includes one or more compliance rules and the one or more action rules.

5. The method of claim 4, wherein the one or more compliance rules include at least one selected from a group consisting of a rule on vulnerability, a rule on license compliance, and a rule on policy compliance.

6. The method of claim 2 or any claim dependent thereon, wherein the taking one or more actions associated with the one or more identified software materials comprises:
taking a first action associated with the one or more identified software materials in a first runtime environment according to the one or more action rules; and
taking a second action associated with the one or more identified software materials in a second runtime environment different from the first runtime environment according to the one or more action rules, the second action being different from the first action.

7. The method of claim 2 or any claim dependent thereon, wherein the one or more actions include at least one selected from a group consisting of:
a recall action to prevent deployment of the software product release;
a marking action to mark the software product release as invalid;
a notification action to notify a user or a software system;
an upgrade action to upgrade the software product release to a new release; and
a rollback action to rollback the software product release to a previous release.

8. The method of any preceding claim, wherein the software product release comprises a plurality of software product releases, wherein the metadata includes an aggregate software bill of materials that aggregates software bill of materials for the plurality of software product releases.

9. A method (300) for using software supply chain to control software operations, the method comprising:
obtaining (305, 307) software supply chain metadata of a software product release after the software product release is deployed, the software supply chain metadata including a collection of software materials;
receiving (315) one or more action rules associated with incompliant software materials;
searching (320) the software supply chain metadata to identify whether the collection of software materials include any incompliant software material; and
allowing (330) continued operation of the software product release if the collection of software materials does not include any incompliant software material;
wherein the method is performed using one or more processors.

10. The method of claim 9, wherein the software supply chain metadata includes a software bill of materials.

11. The method of claim 9 or claim 10, further comprising:
if the collection of software materials includes one or more identified incompliant software material:
taking one or more actions (335) associated with the one or more identified software materials according to the one or more action rules.

12. The method of claim 11, wherein the searching the software supply chain metadata comprises searching the software supply chain metadata based at least in part on a software operation policy, wherein the software operation policy includes one or more compliance rules and the one or more action rules.

13. The method of claim 12, wherein the one or more compliance rules include at least one selected from a group consisting of a rule on vulnerability, a rule on license compliance, and a rule on policy compliance, wherein the software product release comprises a plurality of software product releases, and wherein the metadata includes an aggregate software bill of materials that aggregates software bill of materials for the plurality of software product releases.

14. A system (500) for using software supply chain to control software operations, the system comprising:
one or more processors (504); and
one or more memories having a plurality of instructions stored thereon that, when executed by the processor, causes the one or more processors to perform the method of any preceding claim.
